# EUROPEAN PATENT SPECIFICATION

(11) **EP 0 471 653 B1**
(45) Date of publication and mention of the grant of the patent: **01.06.1994**
(21) Application number: 91830324.9
(22) Date of filing: 23.07.1991
(51) Int. Cl.: B60G 3/26

(54) **An independent suspension for a motor-vehicle wheel**
Unabhängige Aufhängung für ein Motorfahrzeugrad
Suspension indépendante pour une roue de véhicule automobile

(30) Priority: 30.07.1990 IT 6760790
(43) Date of publication of application: 19.02.1992
(73) Proprietor: FIAT AUTO S.p.A., 10135 Torino (IT)
(72) Inventor: Di Giusto, Nevio, I-10124 Torino (IT); Cavazza, Alessandro, I-10137 Torino (IT)
(74) Representative: Marchitelli, Mauro

(56) References cited:
- EP-A- 0 083 235
- EP-A- 0 378 028
- US-A- 2 345 201
- US-A- 3 729 210
- US-A- 3 833 235
- PATENT ABSTRACTS OF JAPAN vol. 12, no. 157 (M-696)(3004)
- 13 May 1988 & JP-A-62 275 810 ( TOYOTA MOTOR CORP ) 30 November 1987

## Description

The present invention relates to an independent suspension for a motor-vehicle wheel, of the type including a support for the wheel connected to a single wishbone articulated to the chassis.

More particularly, the invention relates to a suspension according to the pre-characterising portion of claim 1, which is known from EP-A-0 378 028. This document shows an independent suspension for a motor vehicle wheel, including a support for the wheel connected to a single wishbone articulated to the chassis, and a mechanism for maintaining the chamber angle of the wheel as it oscillates, whereby an oscillation of the wishbone about its axis of articulation to the chassis causes a corresponding oscillation of the support for the wheel which tends to compensate for the change in the chamber angle of the wheel.

The object of the present invention is to provide a suspension of the type defined above having the kinematic characteristics of a suspension of the articulated-quadri-lateral type which, as is known, has four swinging arms arranged in pairs in vertical planes.

A further object of the present invention is to provide a suspension which has the smallest possible dimensions in the direction perpendicular to the ground so as to make the suspension more compact and to reduce the disturbance of the air-flow, particularly with a view to the use of the suspension unit in racing vehicles.

According to the present invention, these objects are achieved by a suspension of the type defined above, characterised in that the support for the wheel is articulated to the wishbone about an axis substantially parallel to the axis of articulation of the wishbone to the chassis and in that said mechanism includes a transmission member mounted for oscillation with the wishbone and for rotation about an axis substantially perpendicular to the axis of articulation of the wishbone to the chassis, the transmission member being connected at one end to the chassis and at the other end to the support for the wheel.

By virtue of these characteristics, despite the fact that it has only one articulated arm, the suspension unit can control the camber angle of the wheel during its oscillations.

Preferably, the suspension according to the present invention includes a fairing which covers the wishbone and has a generally aerofoil-like section with its concavity facing upwardly. The air-flow over the fairing thus creates a downthrust towards the ground which increases the load on the wheel and thus improves stability.

Further characteristics and advantages of the present invention will become clear in the course of the detailed description which follows with reference to the appended drawings, provided purely by way of non-limiting example, in which:
Figure 1 is a schematic perspective view of a suspension according to the present invention,
Figure 2 is a perspective view of the suspension of Figure 1 with a fairing,
Figure 3 is a plan view taken on the arrow III of Figure 2, and
Figure 4 shows a variant of the suspension of Figure 1.

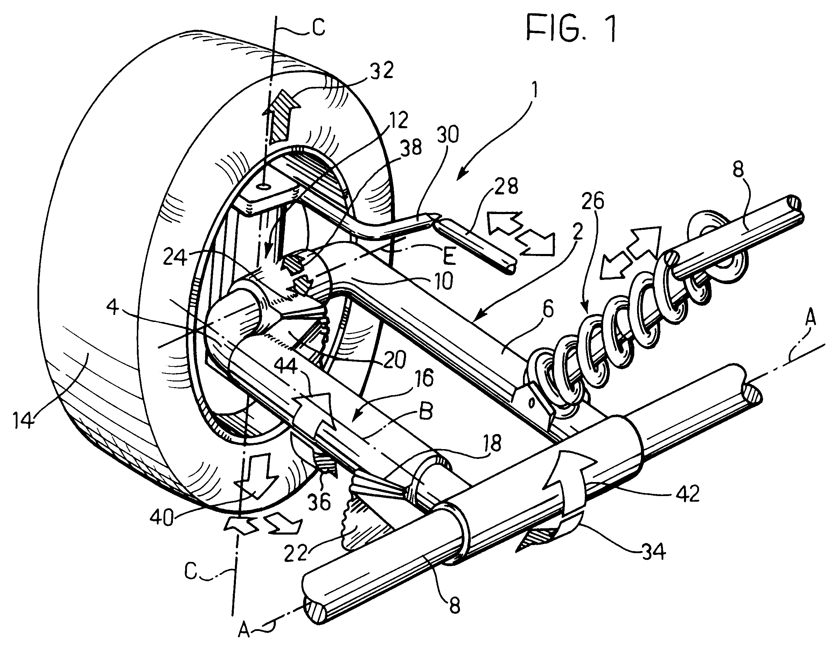

With reference to Figure 1, a suspension for a steered front wheel of a motor vehicle is indicated 1. The suspension 1 is constituted by a single U-shaped wishbone 2 with two parallel arms 4, 6 articulated at one end to the chassis 8 about a longitudinal axis A. The two arms 4, 6 of the wishbone 2 are interconnected by a portion 10 which is substantially parallel to the axis A and to which a support 12 for the wheel 14 is articulated.

A transmission member is arranged on the arm 4 and, in the embodiment illustrated in the drawings, is constituted by a sleeve 16 rotatable about an axis B perpendicular to the articulation axis A of the wishbone 2. At its ends, the sleeve 16 has two bevel-toothed sectors 18, 20, the first of which meshes with a corresponding bevelled sector 22 fixed to the chassis 8 and the second of which meshes with a toothed sector 24 fixed to the support 12 for the wheel 14.

The lower end of a conventional spring-shock absorber unit 26 is articulated to the arm 6 of the wishbone 2 and its upper end is articulated to the chassis 8. A steering rod, indicated 28, is connected in conventional manner to a lever 40 which steers the wheel about an axis C.

In operation, when the wheel 14 moves in the direction indicated by the arrow 32 because of the unevenness of the ground, the wishbone 2 pivots about the axis A in the sense indicated by the arrow 34. The toothed sectors 18, 22 impart to the sleeve 16 a rotary movement about the axis B in the sense indicated by the arrow 36. The rotation of the sleeve 16 causes the support 12 to rotate about the axis E in the sense indicated by the arrow 38. This rotation corrects the camber angle of the wheel 14 which would inevitably be altered as a result of the rotation of the wishbone 2. The base value and variations of the camber angle are established by the geometry of the toothed sectors 18, 20, 22, 24.

When the wheel 14 moves in the direction indicated by the arrow 40, however, the wishbone 2 pivots in the sense 42, the sleeve 16 consequently rotates in the sense 44 and the wheel support 12 rotates in the sense 46.

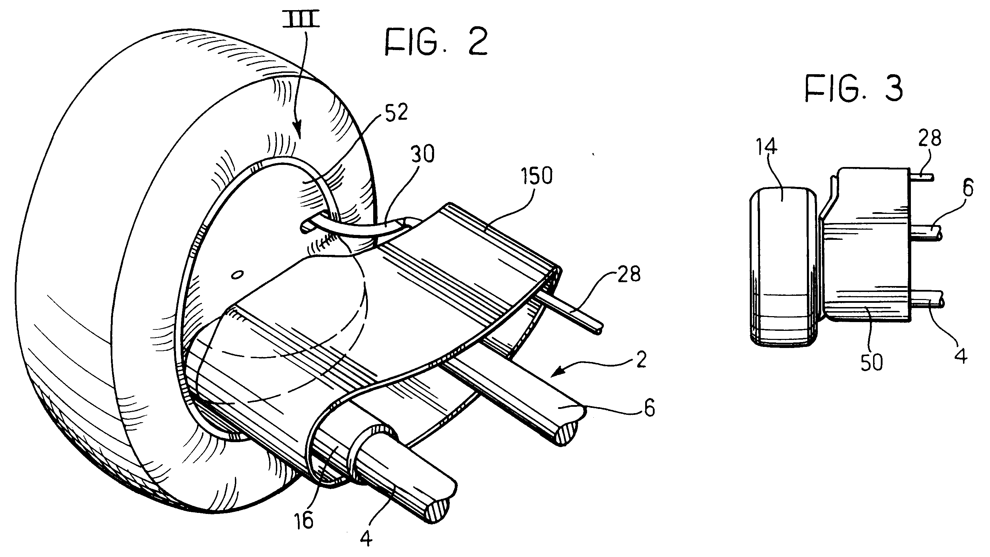

As can be seen in Figures 2 and 3, by virtue of its small dimensions in the direction perpendicular to the ground, the suspension according to the present invention can be fitted in a fairing 50 with an aerofoil-like section whose concavity faces upwardly. A closure panel 52 may also be fitted to the inner side of the wheel 14.

When air flows over the fairing 50 at high speed, a downthrust towards the ground is created, increasing the load on the wheel 14. This characteristic is particularly advantageous in view of the use of the suspension 2 on racing vehicles. The fairing 50 also reduces the turbulence caused by the suspension and improves the aerodynamic penetration of the vehicle.

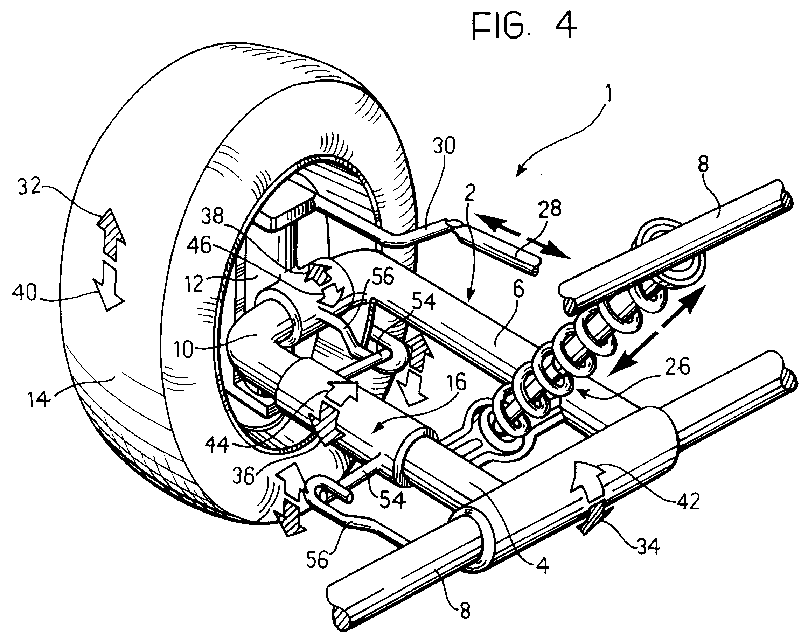

Figure 4 shows a variant of the suspension according to the present invention. Parts similar to those described above are indicated by the same reference numerals.

In this case, the toothed sectors 18-24 on the sleeve 16 are replaced by radial pins 54 engaged in slots in shaped restraining members 56 fixed to the chassis 8 and to the support 12 of the wheel 14.

## Claims

1. An independent suspension for a motor-vehicle wheel, including a support (12) for the wheel (14) connected to a single wishbone (2) articulated to the chassis (8), and a mechanism for maintaining the camber angle of the wheel (14) as it oscillates, whereby an oscillation of the wish-bone (2) about its axis of articulation (A) to the chassis (8) causes a corresponding oscillation of the support (12) for the wheel (14) relative to the wishbone (2) which tends to compensate for the change in the chamber angle of the wheel (14), characterised in that the support (12) for the wheel (14) is articulated to the wishbone (2) about an axis (E) substantially parallel to the axis (A) of articulation of the wishbone (2) to the chassis (8) and in that said mechanism includes a transmission member (16) mounted for oscillation with the wishbone (2) and for rotation about an axis (B) substantially perpendicular to the axis (A) of articulation of the wishbone (2) to the chassis (8), the transmission member (16) being connected at one end to the chassis (8) and at the other end to the support (12) for the wheel (14).

2. A suspension according to Claim 1, characterised in that it includes a fairing (50) which covers the wishbone (2) and has a generally aerofoil-like section with its concavity facing upwardly.

3. A suspension according to Claim 1, characterised in that the wishbone (2) includes a pair of parallel arms (4, 6), whereby a sleeve (16) constituting the transmission member is rotatable on one of the arms.

4. A suspension according to Claim 3, characterised in that the sleeve (16) has toothed sectors (18, 20) at its ends, a first one of which meshes with a sector (22) carried by the chassis (8) and the second one of which meshes with a toothed sector (24) carried by the support (12) for the wheel (14).

5. A suspension according to Claim 4, characterised in that the toothed sectors (18-24) are bevelled.

6. A suspension according to Claim 3, characterised in that the sleeve (16) has a pair of radial pins (54) slidable in respective slots in restraining members (56) fixed to the chassis (8) and to the support (12) for the wheel (14) respectively.

## Patentansprüche

1. Unabhängige Aufhängung für ein Kraftfahrzeugrad, die eine Halterung (12) für das Rad (14) enthält, die mit einem einzelnen Querlenker (2) verbunden ist, der gelenkig am Chassis (8) angebracht ist, sowie einen Mechanismus, der den Radsturzwinkel des Rades (14) aufrechterhält, wenn es schwingt, wodurch eine Schwingung des Querlenkers (2) um seine Achse (A) der gelenkartig beweglichen Anbringung des Querlenkers am Chassis (8) eine entsprechende Schwingung der Halterung (12) für das Rad (14) in bezug auf den Querlenker (2) erzeugt, die die Veränderung des Radsturzwinkels des Rades (14) ausgleicht, **dadurch gekennzeichnet,** daß die Halterung (12) für das Rad (14) um ein Achse (E) gelenkartig beweglich an dem Querlenker (2)angebracht ist, die im wesentlichen parallel zur Achse (A) der gelenkartig beweglichen Anbringung des Querlenkers (2) am Chassis (8) ist, und dadurch, daß der Mechanismus ein Übertragungselement (16) enthält, das mit dem Querlenker (2) schwingend und um eine Achse (B) drehbar angebracht ist, die im wesentlichen senkrecht zur Achse (A) der gelenkartig beweglichen Anbringung des Querlenkers (2) am Chassis (8) ist, wobei das Übertragungselement (16) an einem Ende mit dem Chassis (8) verbunden ist und am anderen Enden mit der Halterung (12) für das Rad (14).

2. Aufhängung nach Anspruch 1, **dadurch gekennzeichnet,** daß sie eine Verkleidung (50) enthält, die den Querlenker (2) abdeckt und einen im allgemeinen tragflächenartigen Querschnitt hat, dessen Hohlrundung nach oben gerichtet ist.

3. Aufhängung nach Anspruch 1, **dadurch gekennzeichnet,** daß der Querlenker (2) ein Paar paralleler Arme (4, 6) enthält, wobei eine Hülse (16), die das Übertragungselement bildet, an einem der Arme drehbar ist.

4. Aufhängung nach Anspruch 3, **dadurch gekennzeichnet,** daß die Hülse (16) Zahnbögen (18, 20) an ihren Enden aufweist, wobei ein erster davon mit einem Zahnbogen (22) im Eingriff ist, der von dem Chassis (8) gehalten wird, und der zweite davon mit einem Zahnbogen (24) im Eingriff ist, der durch die Halterung (12) für das Rad (14) gehalten wird.

5. Aufhängung nach Anspruch 4, **dadurch gekennzeichnet,** daß die Zahnbögen (18-24) kegelförmig sind.

6. Aufhängung nach Anspruch 3, **dadurch gekennzeichnet,** daß die Hülse (16) ein Paar Radialzapfen (54) aufweist, die in entsprechenden Schlitzen in Halteelementen (56) gleiten, die an dem Chassis (8) bzw. an der Halterung (12) für das Rad (14) angebracht sind.

## Revendications

1. Suspension indépendante pour une roue de véhicule automobile, comprenant un support (12) pour la roue (14) relié à un unique triangle (2) articulé sur le châssis (8), et un mécanisme servant à maintenir l'angle de carrossage de la roue (14) lorsqu'elle oscille, de sorte que l'oscillation du triangle (2) autour son axe (A) d'articulation sur le châssis (8) détermine une oscillation correspondante du support (12) de la roue (14) par rapport au triangle (2), qui tend à compenser la variation de l'angle de carrossage de la roue (14), caractérisée en ce que le support (12) de la roue (14) est articulé sur le triangle (2) autour d'un axe (E) sensiblement parallèle à l'axe (A) d'articulation du triangle (2) sur le châssis (8) et en ce que ledit mécanisme comprend un élément de transmission (16) monté pour osciller avec le triangle (2) et pour tourner autour d'un axe (B) sensiblement perpendiculaire à l'axe (A) d'articulation du triangle (2) sur le châssis (8), l'élément de transmission (16) étant relié au châssis (8) par une première extrémité et au support (12) de la roue (14) par l'autre extrémité.

2. Suspension selon la revendication 1, caractérisée en ce qu'elle comprend un carénage (50) qui recouvre le triangle (2) et qui possède sensiblement un protil de plan aérodynamique dont la concavité est dirigée vers le haut.

3. Suspension selon la revendication 1, caractérisée en ce que le triangle (2) comprend deux bras parallèles (4, 6), un manchon (16) qui constitue l'élément de transmission étant monté rotatif sur l'un des bras.

4. Suspension selon la revendication 3, caractérisée en ce que le manchon (16) possède à ses extrémités des secteurs dentés (18, 20) dont un premier engrène avec un secteur (22) porté par le châssis (8) et dont le deuxième engrène avec un secteur denté (24) porté par le support (12) de la roue (14).

5. Suspension selon la revendication 4, caractérisée en ce que les secteurs dentés (18, 24) sont coniques.

6. Suspension selon la revendication 3, caractérisée en ce que le manchon (16) possède deux doigts radiaux (54) qui coulissent dans des fentes respectives prévues dans des éléments de retenue (56) fixés respectivement au châssis (8) et au support (12) de la roue (14).
